# FASCICULE DE BREVET EUROPEEN

(11) **EP 2 519 462 B1**
(45) Date de publication et mention de la délivrance du brevet: **12.02.2014**
(21) Numéro de dépôt: 10809160.4
(22) Date de dépôt: 27.12.2010
(51) Int. Cl.: B65G 47/08, B65G 47/244, B65G 47/82

(54) **MACHINE ET PROCEDE DE GROUPAGE DE PRODUITS A ENCAISSER**
MASCHINE UND VERFAHREN ZUR FORMUNG EINZUPACKENDER PRODUKTGRUPPEN
MACHINE AND METHOD FOR FORMING GROUPS OF PRODUCTS TO BE CASED

(30) Priorité: 30.12.2009 FR 0959662
(43) Date de publication de la demande: 07.11.2012
(73) Titulaire: Sidel Participations, 76930 Octeville sur Mer (FR)
(72) Inventeur: GATOS, David, F-76930 Octeville-sur-mer (FR)
(74) Mandataire: Cabinet Plasseraud
(86) Numéro de dépôt international: PCT/FR2010/052920
(87) Numéro de publication internationale: WO 2011/080480

(56) Documents cités:
- EP-A1- 1 052 200
- EP-A1- 2 204 342
- FR-A1- 2 200 176
- FR-A1- 2 918 359
- JP-A- 2002 096 926

## Description

La présente invention concerne une machine et un procédé de groupage de produits en vue de leur encaissage et, plus particulièrement, de produits dont la section n'est pas circulaire comme, par exemple, des récipients et flacons de forme ovoïde.

Ce type de machine est notamment décrit dans le document FR 2 918 359, qui décrit le préambule de la revendication 1 et qui concerne un procédé et une machine de groupage de produits en vue de leur encaissage.

Cette machine de groupage, comprend : - un convoyeur d'alimentation qui amène les produits à regrouper, - une table d'accueil qui est disposée sur le côté du convoyeur d'amenée et au même niveau, - un collecteur mobile pour capter les produits à la volée sur ledit convoyeur d'amenée, lequel collecteur comporte des alvéoles qui sont disposées en ligne, transversalement par rapport au sens longitudinal d'arrivée des produits, - un chariot pour porter ledit collecteur et pour le déplacer au-dessus dudit convoyeur d'amenée et de la table d'accueil, - une structure pour guider ledit chariot et - des moyens de commande dudit chariot pour effectuer, en cycle fermé, les différentes opérations de regroupement des produits.

Le chariot est manoeuvré pour déplacer le collecteur dont les mouvements se répètent, en boucle, selon un cycle fermé qui se décompose en plusieurs phases : - une phase dédiée à la capture des produits sur le convoyeur d'amenée, - une phase dédiée au transfert des produits captés vers la table d'accueil, au poste de dépose, où le lot de produits captés est pris en charge par des moyens appropriés en vue de l'encaissage, par exemple, - et une phase dédiée au retour du collecteur à la case départ pour recommencer le cycle de capture.

Ce type de machine permet la capture de tous types de produits en vue de la formation d'un lot qui sera ensuite repris par des moyens appropriés pour réaliser une opération finale d'encaissage, par exemple.

Cette opération d'encaissage s'effectue en prenant le lot qui se présente sous la forme d'un rang de produits et ce rang est introduit dans la caisse dans l'attente du ou des rangs suivants et l'ensemble occupe la place dévolue à l'intérieur de ladite caisse.

Les produits captés par ce collecteur sont généralement des produits du genre bouteilles et/ou flacons dont la forme est régulière, avec une section qui est circulaire. Lorsque ces produits sont largués au poste de dépose, par le collecteur, ils forment un rang rectiligne, prêt à être pris en charge par un outillage en vue de l'encaissage.

La réussite de cette opération d'encaissage dépend principalement de la qualité géométrique du lot, qu'il s'agisse d'un lot constitué d'un seul rang de produits ou d'un lot comprenant plusieurs rangs de produits.

Pour certains types de produits dont la section n'est pas circulaire, comme des flacons de section ovoïde, par exemple, la place dévolue dans la caisse est telle qu'elle impose une préparation préalable du lot de produits qui consiste à mettre le lot sous une forme dite « en épis », c'est-à-dire une forme qui présente l'avantage de réduire le volume occupé par l'ensemble des produits et de caler correctement ces produits dans la caisse.

Ce genre de produits impose des aménagements particuliers sur la machine de groupage. Ainsi, comme décrit dans le document JP 2002 096926, les produits arrivent couchés et ils tombent dans les alvéoles d'un tapis sans fin d'où ils sont éjectés par un poussoir en forme de peigne.

Dans le document FR 2 940 788, les produits sont captés par un collecteur en forme de peigne qui est orienté en oblique par rapport à l'axe longitudinal d'arrivée des produits. Dans cette machine, les lots de produits sont donc largués en biais par le collecteur et cette particularité impose une réorientation du lot pour l'encaissage.

La présente invention propose une machine selon la revendication 1 et un procédé de groupage de ces produits particuliers selon la revendication 10 qui permet de surmonter de façon simple et efficace les difficultés rencontrées avec les solutions antérieures.

Les moyens mis en oeuvre par l'invention permettent en effet de réaliser un regroupement des produits sous forme de rangs rectilignes en vue de former un lot ou plusieurs lots assemblés, et ceci avec une grande qualité géométrique pour ledit lot.

Cette préparation des lots permet la réalisation d'un encaissage sans échec, ledit encaissage pouvant s'effectuer, selon le cas, en plusieurs opérations successives à partir des rangs de produits formés par le collecteur, ou en une seule opération grâce à un regroupement préalable de plusieurs rangs de produits pour former un lot qui comprend un nombre total de produits correspondant exactement au nombre de produits logeables dans la caisse.

La machine de groupage de produits, selon l'invention, comprend :
- un convoyeur qui amène des produits alignés et espacés ;
- un collecteur en forme de peigne qui s'étend perpendiculairement à l'axe xx' longitudinal d'amenée ;
- une table disposée au niveau et à côté dudit convoyeur, avec un poste de dépose où le lot de produits est repris en vue de l'encaissage ;
- une structure appropriée pour porter et permettre le déplacement longitudinal et transversal dudit collecteur par rapport audit convoyeur d'amenée, au-dessus de ce dernier et au-dessus de ladite table d'accueil des lots de produits ;
et elle comprend un collecteur qui est aménagé pour capturer et orienter des produits qui arrivent debout et dont la section horizontale est non circulaire, de type ovoïde, lequel collecteur comporte des alvéoles disposées en oblique par rapport à l'axe xx' longitudinal d'amenée pour réaliser une orientation automatique desdits produits lors de leur capture, dans un configuration en épis.

Les alvéoles du collecteur sont orientées selon un axe oblique qui fait un angle a compris entre 10 et 45° avec l'axe xx' longitudinal.

Selon une autre disposition de l'invention, la machine de groupage comporte un collecteur qui se présente sous la forme d'un peigne façonné à partir d'une plaque rectangulaire en matériau du type thermoplastique, lequel collecteur comporte des alvéoles régulièrement réparties sur sa longueur.

Toujours selon l'invention, le collecteur comprend des alvéoles dont la forme correspond à celle des produits à capter, laquelle forme permet d'éviter, d'une part, la détérioration des surfaces desdits produits et, d'autre part, dans le cas de cadences élevées, les risques de rebond du produit lors de sa capture, lorsqu'il atteint le fond de l'alvéole correspondante.

Selon une autre disposition de l'invention, le collecteur est constitué de deux peignes alvéolés superposés façonnés dans un bloc ou façonnés à partir de deux plaques assemblées ensemble, séparées par des entretoises, de façon à offrir un double appui aux produits pour améliorer leur stabilité, notamment pendant leur déplacement entre le convoyeur d'amenée et le poste de dépose sur la table d'accueil.

Toujours selon l'invention, la machine de groupage comporte des moyens pour détecter la présence d'un produit à capter sur ledit convoyeur d'amenée, lesquels moyens sont disposés latéralement et en amont dudit collecteur.

Selon une autre disposition de l'invention, la machine de groupage comporte une table d'accueil des produits qui est constituée d'un convoyeur à tapis sans fin, lequel convoyeur est piloté pour assurer une sorte d'accumulation permettant de regrouper plusieurs lots de produits façonnés par le collecteur.

Toujours selon l'invention, la machine de groupage comprend deux tables d'accueil des produits captés, lesquelles tables d'accueil sont constituées de panneaux ou de convoyeurs à tapis sans fin qui s'étendent de part et d'autre du convoyeur d'amenée desdits produits pour permettre une dépose desdits produits déplacés par le collecteur de chaque côté dudit convoyeur d'amenée.

Selon une autre disposition de l'invention, la machine de groupage comporte au moins un robot de prise en charge des produits qui sont disposés en épis sur la table d'accueil, lequel robot comporte une tête aménagée pour prélever le lot de produits et les mettre en caisse(s).

L'invention concerne également le procédé mis en oeuvre par la machine détaillée auparavant et en particulier un procédé de groupage de produits qui sont alignés et espacés sur un convoyeur d'amenée, lequel procédé comprend les étapes suivantes:
- une étape de capture desdits produits par un collecteur en forme de peigne qui est disposé transversalement par rapport au sens d'arrivée desdits produits ;
- une étape de transfert desdits produits vers une table disposée le long dudit convoyeur d'amenée,
- une étape de largage du lot de produits au poste de dépose ;
- une étape retour dudit collecteur au point de départ, c'est-à-dire au niveau du premier produit sur ledit convoyeur d'amenée ;
et il consiste, en plus :
- à capter des produits debout, de section horizontale non circulaire, du type ovoïde, au moyen d'un collecteur dont les alvéoles sont disposées en oblique par rapport au sens d'arrivée desdits produits,
- à orienter lesdits produits de façon automatique, simultanément à l'opération de capture pour les placer dans une configuration en épis,
- et, lors de l'opération de largage, à déplacer ledit collecteur selon un mouvement de recul qui est parallèle à l'orientation desdites alvéoles.

Toujours selon l'invention, le procédé de groupage consiste à déposer les produits regroupés par le collecteur, de chaque côté du convoyeur d'amenée, et ceci de façon alternative, c'est-à-dire sur la rive droite et sur la rive gauche dudit convoyeur d'amenée, pour réduire les cadences d'encaissage des lots de produits ainsi formés, au niveau des postes de dépose.

Selon une autre disposition de l'invention, le procédé de groupage consiste à déposer plusieurs rangs de produits regroupés sous forme de lots, de façon adjacente, au niveau du poste de dépose, avant d'évacuer l'ensemble par des moyens appropriés du genre robot ou autre, en vue de leur mise en caisse.

Pour pouvoir être exécutée, l'invention est exposée de façon suffisamment claire et complète dans la description suivante qui, en plus, est accompagnée de dessins dans lesquels :

- la figure 1 illustre, schématiquement une machine selon l'invention, c'est-à-dire une machine d'orientation et de groupage en épis de produits dont la section au niveau de leur prise en charge par le collecteur n'est pas circulaire, laquelle machine est vue en plan ;

- la figure 2 représente, schématiquement, une élévation de la machine d'orientation et de groupage représentée figure 1 ;

- la figure 3 représente, de façon plus détaillée, un collecteur qui permet de réaliser l'orientation et le groupage en épis de ces produits particuliers dont la section n'est pas circulaire comme, par exemple, des flacons à section ovoïde ;

- la figure 4 représente, en vue de côté, la superposition et l'assemblage de deux collecteurs ;

- la figure 5 représente, en traits forts et en traits mixtes fins, les cheminements du collecteur, parcourus en boucle, selon qu'il dépose son lot de produits, respectivement, à droite ou à gauche du convoyeur d'amenée, ledit sens étant pris depuis l'arrivée desdits produits.

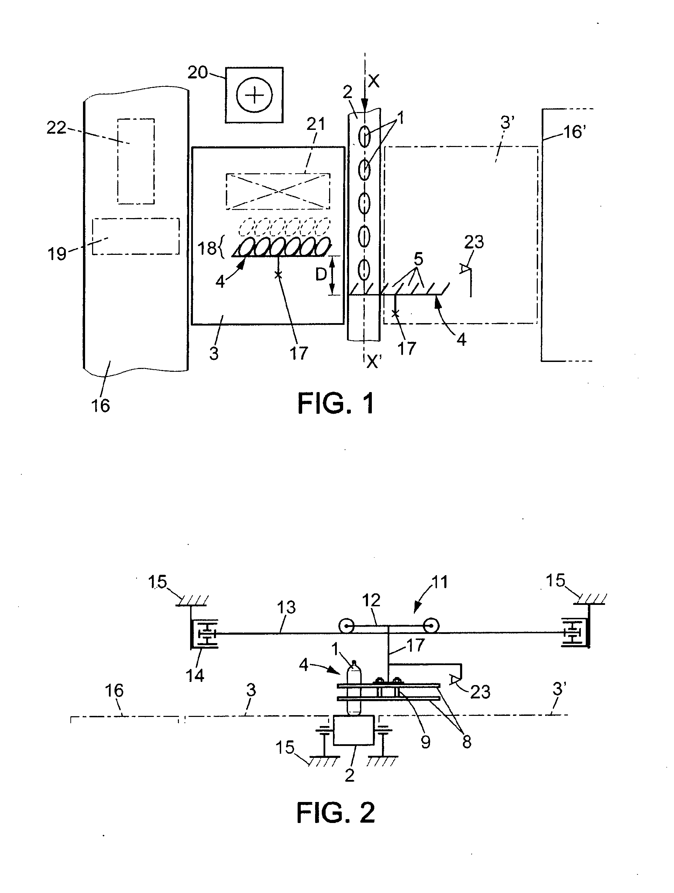

Les figures 1 et 2 montrent, schématiquement, une machine d'orientation et de groupage de produits 1 du type flacons ou récipients qui sont regroupés en position debout. Cette machine s'apparente à celle qui est décrite dans le document FR 2 918 359 précité.

Les produits 1 ont une section horizontale, au niveau de leur zone de capture, qui n'est pas circulaire mais de forme ovoïde ; une forme du genre ovale, par exemple, qui est définie par un grand axe et par un petit axe.

La machine comprend un convoyeur 2 du type à tapis sans fin à mouvement continu qui amène les produits 1. Ce convoyeur 2 d'amenée est alimenté par une autre machine, non représentée, située en amont, qui correspond, par exemple, à une étiqueteuse. Sur ce convoyeur 2 d'amenée, les produits sont disposés en file indienne, debout, espacés les uns par rapport aux autres. Cet espacement est, de préférence régulier, obtenu au moyen d'un dispositif approprié, non représenté.

Les produits 1 sont tous disposés de la même façon sur le convoyeur 2 d'amenée ; ils sont orientés de façon à ce que leur grand axe coïncide avec l'axe longitudinal xx' dudit convoyeur 2 d'amenée.

La machine comprend aussi au moins une table 3 qui s'étend le long du convoyeur 2 d'amenée pour accueillir les produits 1. Une table 3 a été représentée sur la rive droite du convoyeur 2 d'amenée en traits forts et une autre table 3' a été représentée sur la rive gauche, en traits mixtes fins.

Le convoyeur 2 d'amenée, la table 3, et la table 3' selon le cas, sont situés côte à côte, dans un même plan pour permettre un transfert à niveau des produits 1 dudit convoyeur 2 sur ladite table 3, ou 3'. Ce transfert s'effectue au moyen d'un dispositif de collecte qui sera appelé dans la suite du texte : collecteur 4.

Ce collecteur 4 se présente sous la forme d'un peigne rectiligne qui circule au-dessus de l'extrémité aval du convoyeur 2 d'amenée et parallèlement au plan de ce dernier et de la table 3 et de la table 3' selon le cas ; il circule transversalement et longitudinalement par rapport à l'axe longitudinal xx' dudit convoyeur 2 d'amenée.

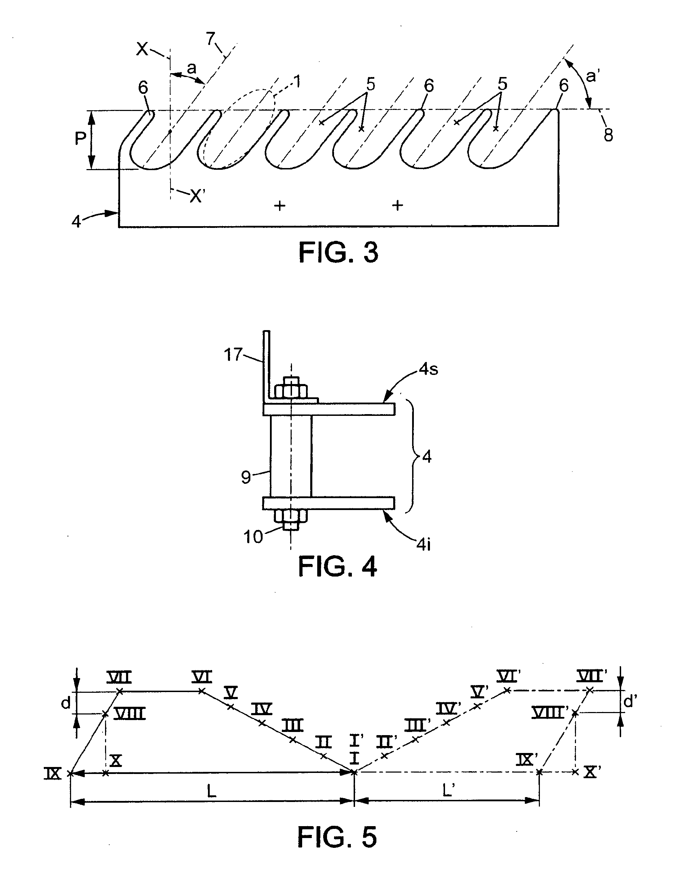

Ce collecteur 4 apparaît figure 3 d'une façon plus détaillée. Il est, par exemple, façonné à partir d'une plaque rectangulaire en matériau thermoplastique et il comporte des alvéoles 5 délimitées latéralement par des dents 6. Les alvéoles 5 sont ouvertes sur l'un des grands côtés du collecteur 4 et en particulier sur le côté qui est normalement tourné vers l'amont du convoyeur 2 d'amenée, pour accueillir les produits 1 qui sont disposés sur ce dernier.

Les alvéoles 5 sont disposées en oblique par rapport à l'axe longitudinal xx' du convoyeur 2 d'amenée, lequel axe xx' correspond aussi à l'axe longitudinal d'arrivée des produits 1 sur ledit convoyeur 2.

L'inclinaison de l'axe 7 oblique de ces alvéoles 5 par rapport à l'axe longitudinal xx' d'arrivée, comme représentée figure 3, correspond à un angle a qui est compris, par exemple, entre 10 et 45° selon la forme et la nature des produits 1 à capter.

Cette inclinaison de l'axe 7 oblique des alvéoles 5 peut aussi se mesurer directement sur le peigne en prenant, comme référence, la ligne 8 qui passe par l'extrémité amont des dents 6. L'angle complémentaire a' est compris entre 45 et 80°, par exemple.

De préférence, la forme des alvéoles 5 est adaptée à celle des produits 1 à capter de façon à éviter une détérioration des surfaces externes et en particulier des étiquettes disposées sur lesdites surfaces et cette forme est également choisie pour éviter les phénomènes de rebond lorsque le produit 1 se cale dans ladite alvéole.

Selon le type de produits 1, et en particulier selon sa stabilité, c'est-à-dire selon la position de son centre de gravité, on peut être amené à utiliser un collecteur 4 qui est composé de plusieurs peignes superposés.

La figure 4 est une vue de côté montrant un collecteur 4 comportant deux peignes qui sont superposés : un peigne 4i inférieur et un peigne 4s supérieur dont l'écartement est choisi en fonction des produits à regrouper.

Ces peignes sont soit façonnés dans un seul et même bloc en matériau thermoplastique, soit façonnés à partir de deux plaques distinctes qui sont séparées par une ou plusieurs entretoises 9 et ces plaques sont assemblées ensemble au moyen de boulons 10 ou autres qui permettent également le montage du collecteur 4 sur les moyens détaillés ci-après, lesquels moyens permettent de le manoeuvrer au-dessus du convoyeur 2 et de la table 3 .

Ce collecteur 4, qu'il soit constitué d'un seul ou de plusieurs peignes 8, est associé, comme représenté figure 2, à une structure 11 du type de celle qui est décrite dans le document FR 2 918 359 précité. Des servomoteurs, non représentés, assurent les mouvements du collecteur 4 dans le sens qui correspond à l'axe longitudinal xx' d'arrivée des produits, et dans le sens transversal, perpendiculairement audit axe xx'.

La structure 11 est mobile par rapport au convoyeur 2 d'amenée et par rapport à la table 3, et à la table 3' selon le cas. Cette structure 11 comprend un chariot 12 qui porte le collecteur 4 et une poutre 13 qui porte ledit chariot 12. La poutre 13 est disposée transversalement par rapport au convoyeur.

La poutre 13 est située au-dessus du collecteur 4, à une distance nettement supérieure à la hauteur maximale des produits 1 susceptibles d'être traités par la machine. Cette poutre 13 est guidée par des glissières 14 qui sont disposées longitudinalement en bordure de la table 3 ou des tables 3 et 3' selon le cas, lesquelles glissières 14 sont solidaires du bâti 15 général de la machine et ladite poutre 13 est mobile sous l'effet d'un organe moteur approprié du type servomoteur.

Le chariot 12 est porté par la poutre 13 et il est mobile sur cette poutre 13 par le biais d'un organe moteur approprié également, du type servomoteur. Le chariot 12 balaye ainsi toute une portion de la surface du convoyeur 2 d'amenée et de la table 3 d'accueil, ainsi que de la table 3' selon le cas.

Des moyens de commande appropriés permettent de manoeuvrer le collecteur 4 selon une direction oblique, parallèle à l'axe des alvéoles 5 de capture des produits 1, pour déposer lesdits produits 1 sur la table 3 ou 3' selon le cas. Ces moyens de commande agissent sur les servomoteurs qui déplacent le chariot 12 et la poutre 13.

Le collecteur 4 peut en effet déposer indifféremment les produits 1 d'un côté ou de l'autre du convoyeur 2 d'amenée, c'est-à-dire sur la table 3 ou sur la table 3' représentée en traits mixtes fins.

La table 3, comme la table 3', peut être constituée d'un plan fixe ou être constituée d'un tapis convoyeur dont le rôle sera explicité plus loin.

Cette table 3 peut se prolonger sur son côté latéral libre, par un convoyeur 16 sur lequel on peut, par exemple, réaliser l'opération d'encaissage d'un lot de produits 1 ; il en est de même, comme représenté en traits mixtes fins, pour la table 3' qui peut comporter un convoyeur 16' disposé latéralement.

Cette opération d'encaissage sera détaillée plus loin.

La figure 5 montre le cheminement du collecteur 4, au-dessus du convoyeur 2 et de la table 3 et, en traits mixtes fins, au-dessus de la table 3'.

Ce cheminement, en boucle fermée, comprend une série de mouvements qui s'effectuent selon un cycle qui commence à partir du premier point de capture d'un produit 1 sur le convoyeur 2 d'amenée, et se poursuit par différents points de capture qui sont décalés au fur et mesure, vers l'amont dudit convoyeur 2.

Dans l'exemple représenté, six produits 1 peuvent être captés par le collecteur 4 avant d'être transférés latéralement sur la table 3 et/ou 3'.

On remarque, toujours figure 5, que le collecteur 4 se déplace selon un mouvement transversal et selon un mouvement longitudinal pendant la phase de capture des produits 1, lesquels mouvements sont, par exemple, combinés ; par ce mouvement longitudinal selon xx', le collecteur 4 remonte la file de produits 1 en avançant au-dessus du convoyeur 2 d'amenée, dans un sens qui est le sens inverse de l'avancement dudit convoyeur 2 et desdits produits 1.

Le collecteur 4 avance longitudinalement, selon l'axe xx', d'une distance D totale, mentionnée figure 1, qui peut correspondre, par exemple, au moins à la dimension du pas des produits 1 sur le convoyeur 2.

Cette portion du cheminement longitudinal pour effectuer la capture des produits 1, comme représentée figure 5, s'étend entre le point de capture du premier produit et le point de capture du dernier produit. Ce cheminement est représenté de façon rectiligne avec des points repérés en chiffres romains de I à VI, lesquels points peuvent correspondre, par exemple, à l'emplacement du bras 17 qui s'étend sous le chariot 12 et qui porte le collecteur 4.

Après la capture du dernier produit, le collecteur 4 effectue un déplacement transversal entre les points VI et VII, toujours en chiffres romains, de façon à s'écarter du convoyeur 2 sur lequel sont disposés les produits 1 qui continuent à arriver ; ce déplacement transversal permet au collecteur 4 de transférer son lot de produits 1 sur la table 3 d'accueil, et de le placer au niveau d'un poste repéré 18 que l'on peut qualifier de poste 18 de dépose.

Ce poste 18 de dépose se situe au droit ou sensiblement en amont du niveau du dernier point de capture des produits 1 sur le convoyeur 2 d'amenée.

Au niveau de ce poste 18 de dépose, le lot de produits 1 peut être disposé contre un guide ou une structure d'accueil, non représentés, qui permet de stabiliser la position desdits produits 1 au moment de leur arrivée et au moment du retrait du collecteur 4.

Le collecteur 4 effectue ensuite un mouvement de recul du point VII au point IX, selon une trajectoire oblique dont l'inclinaison correspond à l'inclinaison de l'axe 7 oblique des alvéoles 5. Cette trajectoire peut être constituée d'une portion unique rectiligne, allant du point VII au point IX ou d'une portion en forme de ligne brisée qui comprend une première partie de trajectoire oblique entre les points VII et VIII suivie d'une seconde partie de trajectoire entre les points VIII et X, ladite seconde partie étant parallèle à l'axe longitudinal xx'.

La première partie de la trajectoire de recul, entre les points VII et VIII, a une longueur qui est repérée d sur la figure 5, laquelle longueur correspond sensiblement à la profondeur P des alvéoles 5 représentées figure 3.

A partir du point IX, ou X, selon le cas, le collecteur 4 effectue un retour transversal, selon une portion de longueur L, jusqu'au point I pour se repositionner devant le premier produit 1 qui arrive, apporté par le convoyeur 2.

Le retour du collecteur 4 au point de départ s'effectue à une vitesse qui est supérieure à la vitesse d'avancement du convoyeur 2 pour pouvoir dépasser le premier produit 1 qui a continué à avancer pendant le déroulement des différentes opérations, c'est-à-dire :
- l'opération de transfert du lot de produits 1,
- l'opération de largage dudit lot au poste 18 de dépose et,
- l'opération de retour au point de départ du collecteur 4 pour se repositionner devant le premier produit 1 qui arrive sur le convoyeur 2 d'amenée.

La figure 5 illustre également, en traits mixtes fins, une boucle qui correspond au cheminement du collecteur 4 lorsque le lot de produits 1 est déposé sur la table 3' d'accueil. Le cheminement du collecteur 4 entre les points I' à VI', toujours en chiffres romains, est identique à celui représenté figure 5, de même que le déplacement transversal entre le point VI' et le point VII'. En revanche, on remarque que le mouvement du collecteur 4 pour le largage du lot de produits 1, s'effectue lui aussi en oblique ; ce mouvement oblique entre les points VII' et IX' permet de réduire sensiblement la longueur de la portion L' du retour transversal du collecteur 4.

Ce mouvement oblique de recul du collecteur 4 peut donc s'effectuer lui aussi selon deux trajectoires :
- une première trajectoire qui est constituée d'une portion unique rectiligne, comme indiquée ci-dessus, entre les points VII' et IX', avec une inclinaison par rapport à l'axe xx' qui correspond à celle de l'axe 7 oblique des alvéoles 5 ;
- une seconde trajectoire selon une portion en forme de ligne brisée qui comprend une première partie de trajectoire oblique entre les points VII' et VIII' suivie d'une seconde portion entre les points VIII' et X', laquelle seconde partie est parallèle à l'axe longitudinal xx' ; ladite première partie a une longueur d' qui correspond sensiblement à la profondeur P desdites alvéoles 5.

Cet aménagement permet en fait de déposer l'ensemble des produits 1 captés par le collecteur 4, de chaque côté du convoyeur 2 d'amenée, et ceci de façon alternative, c'est-à-dire sur la rive droite et sur la rive gauche dudit convoyeur 2 d'amenée, pour réduire les cadences d'encaissage des lots de produits ainsi formés, au niveau des postes de dépose sur les tables 3 et 3' respectivement.

La longueur du parcours oblique d, d', peut être réduite à une valeur qui correspond à la profondeur P des alvéoles 5, c'est-à-dire une valeur suffisante pour que le collecteur 4 puisse amorcer rapidement son mouvement de retour vers le point de capture du premier produit 1.

La particularité du collecteur 4 réside dans le fait qu'il impose un pivotement aux produits 1 lorsqu'ils sont sur le convoyeur 2, debout. L'orientation oblique des alvéoles 5 face aux produits 1 qui arrivent orientés avec leur grand axe horizontal confondu avec l'axe longitudinal d'avancement, permet un regroupement automatique des produits 1 dans une configuration en épis. Cette orientation des produits 1 se réalise aussi automatiquement grâce au mode de capture des produits 1, qui s'effectue à la volée, sur le convoyeur 2 d'amenée desdits produits 1, c'est-à-dire que les produits 1 s'orientent et se positionnent automatiquement dans chaque alvéole 5 grâce à leur vitesse d'entrée dans lesdites alvéoles 5.

Ce groupage des produits 1 selon une configuration en épis, permet, comme représenté figure 1, de façonner des lots complets de produits qui correspondent, par exemple, au nombre de produits intégrables dans une caisse.

Sur la figure 1, une caisse 19 est représentée, amenée par le convoyeur 16. Ainsi, pour des caisses 19 du type "wrap-around", le lot de produits peut tout simplement être pris en charge au niveau du poste 18 de dépose, au moyen d'un poussoir, pour être déplacé selon un mouvement transversal en vue de son introduction dans une ébauche de caisse 19 du type "wrap-around".

On peut également prévoir, au moyen d'un robot schématisé par son socle 20, de prélever le lot de produits 1 par l'intermédiaire d'une tête 21 de préhension, laquelle tête 21 s'empare dudit lot, au niveau du poste de dépose 18, en resserrant les produits, par exemple, afin de les introduire dans une autre caisse 22, du type caisse américaine.

La formation d'un lot complet sur la table 3 d'accueil, ou la table 3', peut être favorisée en utilisant comme plan d'accueil la surface supérieure d'un convoyeur à tapis sans fin ; ce convoyeur, peut permettre de décaler automatiquement le lot de produits 1, après leur largage par le collecteur 4 pour assurer une sorte d'accumulation permettant de regrouper plusieurs lots de produits façonnés par le collecteur (4) ; il permet en fait de laisser de la place pour un second lot qui peut, de façon très simple, être regroupé et associé au premier lot déposé.

Comme dans le cas de la machine décrite dans le document FR 2 918 359, il est préférable d'arrêter le mouvement du collecteur 4 au moment de la capture des produits 1. Aussi, comme représenté figure 1 et 2, le chariot 12 comporte un capteur 23, lequel capteur est solidaire du collecteur 4 et il se situe en amont de ce dernier pour détecter la présence des produits 1 sur le convoyeur 2 d'amenée. Des moyens de calcul appropriés prennent en compte cette information, c'est-à-dire la position du premier produit 1 sur le convoyeur d'amenée par rapport au collecteur 4, ainsi que l'information concernant la vitesse dudit convoyeur 2 d'amenée, pour déclencher le cycle de capture de chaque produit 1, au fur et à mesure de son arrivée à proximité dudit collecteur 4.

## Revendications

1. Machine de groupage de produits, comprenant :
- un convoyeur (2) qui amène des produits (1) alignés et espacés ;
- un collecteur (4) en forme de peigne qui s'étend perpendiculairement à l'axe longitudinal xx' d'amenée ;
- une table (3) disposée au niveau et à côté dudit convoyeur (2), avec un poste de dépose où le lot de produits (1) est repris en vue de l'encaissage ;
- une structure (11) appropriée pour porter et permettre le déplacement longitudinal et transversal dudit collecteur (4) par rapport audit convoyeur (2) d'amenée, au-dessus de ce dernier et au-dessus de ladite table d'accueil des lots de produits (1) ; la machine comprenant un collecteur (4) qui est aménagé pour capturer et orienter des produits qui arrivent debout et dont la section horizontale est non circulaire, de type ovoïde, **caractérisée en ce que** le collecteur comporte des alvéoles (5) disposées en oblique par rapport à l'axe longitudinal xx' d'amenée pour réaliser une orientation automatique desdits produits lors de leur capture, dans une configuration en épis.

2. Machine de groupage de produits selon la revendication 1, **caractérisée en ce que** les alvéoles du collecteur (4) sont orientées selon un axe (7) oblique qui fait un angle a compris entre 10 et 45° avec l'axe xx'.

3. Machine de groupage de produits selon l'une quelconque des revendications 1 ou 2, **caractérisée en ce qu'**elle comporte un collecteur (4) qui se présente sous la forme d'un peigne façonné à partir d'une plaque rectangulaire en matériau du type thermoplastique, lequel collecteur (4) comporte des alvéoles (5) régulièrement réparties sur sa longueur.

4. Machine de groupage de produits selon l'une quelconque des revendications 1 à 3, **caractérisée en ce que** le collecteur (4) comprend des alvéoles (5) dont la forme correspond à celle des produits (1) à capter, laquelle forme permet d'éviter, d'une part, la détérioration des surfaces desdits produits (1) et, d'autre part, dans le cas de cadences élevées, les risques de rebond du produit (1) lors de sa capture, lorsqu'il atteint le fond de l'alvéole (5) correspondante.

5. Machine de groupage de produits selon la revendication 4, **caractérisée en ce que** le collecteur (4) est constitué de deux peignes (8) alvéolés superposés façonnés dans un bloc ou façonnés à partir de deux plaques assemblées ensemble, séparées par des entretoises (9), de façon à offrir un double appui aux produits pour améliorer leur stabilité, notamment pendant leur déplacement entre le convoyeur (2) d'amenée et le poste (18, 18') de dépose sur la table (3, 3') d'accueil.

6. Machine de groupage de produits selon la revendication 1, **caractérisée en ce qu'**elle comporte des moyens pour détecter la présence d'un produit (1) à capter sur ledit convoyeur (2) d'amenée, lesquels moyens sont disposés latéralement et en amont dudit collecteur (4).

7. Machine de groupage de produits selon la revendication 1, **caractérisée en ce qu'**elle comporte une table d'accueil des produits (1) qui est constituée d'un convoyeur à tapis sans fin, lequel convoyeur est piloté pour assurer une sorte d'accumulation permettant de regrouper plusieurs lots de produits façonnés par le collecteur (4).

8. Machine de groupage de produits selon la revendication 1, **caractérisée en ce qu'**elle comprend deux tables (3, 3') d'accueil des produits (1) captés, lesquelles tables (3, 3') d'accueil sont constituées de panneaux ou de convoyeurs à tapis sans fin qui s'étendent de part et d'autre du convoyeur (2) d'amenée desdits produits (1) pour permettre une dépose desdits produits déplacés par le collecteur (4) de chaque côté dudit convoyeur (2) d'amenée.

9. Machine de groupage de produits selon la revendication 1, **caractérisée en ce qu'**elle comporte au moins un robot (20) de prise en charge des produits (1) qui sont disposés en épis sur la table (3, 3') d'accueil, lequel robot (20) comporte une tête (21) aménagée pour prélever le lot de produits (1) et les mettre en caisse (s) .

10. Procédé de groupage de produits alignés et espacés sur un convoyeur (2) d'amenée, lequel procédé comprend les étapes suivantes:
- une étape de capture desdits produits (1) par un collecteur (4) en forme de peigne qui est disposé transversalement par rapport au sens d'arrivée desdits produits ;
- une étape de transfert desdits produits (1) vers une table disposée le long dudit convoyeur (2) d'amenée,
- une étape de largage du lot de produits (1) au poste de dépose ;
- une étape retour dudit collecteur (4) au point de départ, c'est-à-dire au niveau du premier produit (1) sur ledit convoyeur (2) d'amenée ;
**caractérisé en ce qu'**il consiste à capter des produits debout, de section horizontale non circulaire, du type ovoïde, au moyen d'un collecteur (4) dont les alvéoles (5) sont disposées en oblique par rapport au sens d'arrivée desdits produits,
**en ce qu'**il consiste, à orienter lesdits produits de façon automatique, simultanément à l'opération de capture pour les placer dans une configuration en épis,
et **en ce qu'**il consiste, lors de l'opération de largage, à déplacer ledit collecteur (4) selon un mouvement de recul qui est parallèle à l'orientation desdites alvéoles (5).

11. Procédé de groupage de produits selon la revendication 10, **caractérisé en ce qu'**il consiste à déposer les produits (1) regroupés par le collecteur (4), de chaque côté du convoyeur (2) d'amenée, et ceci de façon alternative, c'est-à-dire sur la rive droite et sur la rive gauche dudit convoyeur (2) d'amenée, pour réduire les cadences d'encaissage des lots de produits ainsi formés, au niveau des postes de dépose.

12. Procédé de groupage de produits selon l'une quelconque des revendications 10 ou 11, **caractérisé en ce qu'**il consiste à déposer plusieurs rangs de produits (1) regroupés sous forme de lots, de façon adjacente, au niveau du poste de dépose, avant d'évacuer l'ensemble par des moyens appropriés du genre robot (20) ou autre, en vue de leur mise en caisse.

## Patentansprüche

1. Maschine zur Formung von Produktgruppen, umfassend:
- einen Förderer (2), der ausgerichtete und voneinander beabstandete Produkte (1) zuführt;
- einen kammförmigen Sammler (4), der sich senkrecht zur Längszufuhrachse xx' erstreckt;
- einen Tisch (3), der im Bereich des Förderers (2) und neben diesem angeordnet ist, mit einer Ablagestation, wo die Charge von Produkten (1) zwecks Einpackung wieder aufgenommen wird;
- eine Struktur (11), die geeignet ist, den Sammler (4) zu tragen und dessen Bewegung längs und quer zum Zufuhrforderer (2) oberhalb desselben und oberhalb des Tischs zur Aufnahme der Charge von Produkten (1) zu ermöglichen;
- wobei die Maschine einen Sammler (4) umfässt, der so gestaltet ist, dass er aufrecht stehend ankommende Produkte, deren horizontaler Querschnitt unrund, eiförmig ist, erfasst und ausrichtet,
**dadurch gekennzeichnet, dass** der Sammler Zellen (5) aufweist, die schräg zur Längszufuhrachse xx' angeordnet sind, um eine automatische Ausrichtung der Produkte während ihrer Erfassung in einer schrägen Konfiguration vorzunehmen.

2. Maschine zur Formung von Produktgruppen nach Anspruch 1, **dadurch gekennzeichnet, dass** die Zellen des Sammlers (4) entlang einer schrägen Achse (7), die einen Winkel a von 10 bis 45° zur Achse xx' bildet, ausgerichtet sind.

3. Maschine zur Formung von Produktgruppen nach einem der Ansprüche 1 oder 2, **dadurch gekennzeichnet, dass** sie einen Sammler (4) in Form eines Kammes aufweist, der aus einer rechteckigen Platte aus einem Material von thermoplastischer Art gefertigt ist, wobei der Sammler (4) Zellen (5) aufweist, die gleiclunäßig über dessen Länge verteilt sind.

4. Maschine zur Formung von Produktgruppen nach einem der Anspräche 1 bis 3, **dadurch gekennzeichnet, dass** der Sammler (4) Zellen (5) umfasst, deren Form der Form der aufzunehmenden Produkte (1) entspricht, wobei die Form es ermöglicht, einerseits die Beschädigung der Oberflächen der Produkte (1) und andererseits im Falle hoher Taktzeiten die Gefahren des Rückpralls des Produkts (1) bei dessen Erfassung, wenn es die hintere Begrenzung der entsprechenden Zelle (5) erreicht, zu verhindern.

5. Maschine zur Formung von Produktgruppen nach Anspruch 4, **dadurch gekennzeichnet, dass** der Sammler (4) aus zwei übereinanderliegenden, mit Zellen versehenen Kämmen (3) gebildet ist, die aus einem Block oder aus zwei miteinander verbundenen, durch Distanzstücke (9) voneinander beabstandeten Platten gefertigt sind, um den Produkten eine doppelte Stütze zu bieten, um deren Stabilität insbesondere während ihrer Bewegung wischen dem Zufuhrförderer (2) und der Station (18, 18') zur Ablage auf dem Aufnahmetisch (3, 3') zu verbessern.

6. Maschine zur Formung von Produktgruppen nach Anspruch 1, **dadurch gekennzeichnet, dass** sie Mittel zum Erkennen des Vorhandenseins eines aufzunelunenden Produkts (1) auf dem Zufuhrförderer (2) aufweist, wobei die Mittel seitlich und dem Sammler (4) vorgelagert angeordnet sind.

7. Maschine zur Formung von Produktgruppen nach Anspruch 1, **dadurch gekennzeichnet, dass** sie einen Tisch zur Aufnahme der Produkte (1) aufweist, der aus einem Endlosbandförderer gebildet ist, wobei der Förderer geführt wird, um eine Art Ansammlung zu erreichen, die das Zusammenfassen mehrerer durch den Sammler (4) ausgebildeter Produktchargen ermöglicht.

8. Maschine zur Formung von Produktgruppen nach Anspruch 1, **dadurch gekennzeichnet, dass** sie zwei Tische (3, 3') zur Aufnahme der erfassten Produkte (1) umfasst, wobei die Aufnahmetische (3, 3') aus Platten oder Endlosbandförderern gebildet sind, die sich auf beiden Seiten des Förderers (2) zur Zuführung der Produkte (1) erstrecken, um eine Ablage der durch den Sammler (4) bewegten Produkte auf beiden Seiten des Zufuhrförderers (2) zu ermöglichen.

9. Maschine zur Formung von Produktgruppen nach Anspruch 1, **dadurch gekennzeichnet, dass** sie zumindest einen Roboter (20) zur Aufnahme der schräg auf dem Aufnahmetisch (3, 3') angeordneten Produkte (1) aufweist, wobei der Roboter (20) einen Kopf (21) aufweist, der so gestaltet ist, dass er die Charge von Produkten (1) entnimmt und in eine oder mehrere Kisten packt.

10. Verfahren zur Formung von Gruppen aus Produkten, die auf einem Zufuhrförderer (2) ausgerichtet und voneinander beabstandet sind, umfassend folgende Schritte:
- einen Schritt der Erfassung der Produkte (1) durch einen kammförmigen Sammler (4), der quer zur Ankunftsrichtung der Produkte angeordnet ist;
- einen Schritt des Transfers der Produkte (1) zu einem Tisch, der entlang des Zufuhrförderers (2) angeordnet ist,
- einen Schritt des Abwurfs der Charge von Produkten (1) an der Ablagestation;
- einen Schritt der Rückkehr des Sammlers (4) zum Ausgangspunkt, d. h. in den Bereich des ersten Produkts (1) auf dem Zufuhrförderer (2);
**dadurch gekennzeichnet, dass** es darin besteht, aufrecht stehende Produkte mit unrundem, eiförmigem horizontalem Querschnitt mit Hilfe eines Sammlers (4), dessen Zellen (5) schräg zur Ankunftsrichtung der Produkte angeordnet sind, zu erfassen,
dass es darin besteht, die Produkte gleichzeitig zum Erfassungsvorgang automatisch auszurichten, um sie in einer schrägen Konfiguration anzuordnen,
und dass es darin besteht, während des Abwurfvorgangs den Sammler (4) in einer Rückzugsbewegung, die parallel zur Ausrichtung der Zellen (5) ist, zu bewegen.

11. Verfahren zur Formung von Produktgruppen nach Anspruch 10, **dadurch gekennzeichnet, dass** es darin besteht, die durch den Sammler (4) zusammengefassten Produkte (1) auf beiden Seiten des Zufuhrförderers (2) abzulegen, und zwar in alternierender Weise, d. h. auf der rechten Seite und auf der linken Seite des Zufuhrförderers (2), um die Taktzeiten zur Einpackung der derart ausgebildeten Produktchargen im Bereich der Ablagestationen zu reduzieren.

12. Verfahren zur Formung von Produktgruppen nach einem der Ansprüche 10 oder 11, **dadurch gekennzeichnet, dass** es darin besteht, mehrere in Form von Chargen zusammengefasste Reihen von Produkten (1) in angrenzender Weise im Bereich der Ablagestation abzulegen, bevor die Baugruppe durch geeignete Mittel von der Art eines Roboters (20) o. a. zwecks deren Einpackung in Kisten geleert wird.

## Claims

1. Machine for grouping products, comprising:
- a feed conveyor (2) which supplies aligned and spaced-apart products (1);
- a rake-shaped collector (4) which extends perpendicularly to the longitudinal feed axis xx';
- a table (3) arranged level with and next to said conveyor (2), with a depositing station where the batch of products (1) is collected for packing;
- a structure (11) appropriate for supporting and allowing the longitudinal and transverse movement of said collector (4) relative to said feed conveyor (2), above said conveyor and above said table for collecting the batches of products (1);
the machine comprising a collector (4) which is arranged to capture and orient products which arrive upright and have a non-circular horizontal cross-section, of the ovoid type, **characterized in that** said collector comprises cells (5) arranged obliquely relative to the longitudinal feed axis xx' in order to orient said products automatically in an angled row configuration as they are captured.

2. Machine for grouping products according to claim 1, **characterized in that** the cells of the collector (4) are angled along an oblique axis (7) which forms an angle a of between 10 and 45° with the axis xx'.

3. Machine for grouping products according to either of claims 1 or 2, **characterized in that** it comprises a rake-shaped collector (4), fashioned from a rectangular plate of a thermoplastic material, said collector (4) comprising cells (5) regularly distributed along its length.

4. Machine for grouping products according to any one of claims 1 to 3, **characterized in that** the collector (4) comprises cells (5) of a shape which corresponds to that of the products (1) to be captured, which shape makes it possible to avoid on the one hand, damaging the surfaces of said products (1) and, on the other hand, in case of high throughput speeds, the risk of the product (1) rebounding during capture, when reaching the bottom of the corresponding cell (5).

5. Machine for grouping products according to claim 4, **characterized in that** the collector (4) consists of two superimposed rakes (8) with cells, fashioned as a unit or from two plates assembled together, separated by spacers (9), to provide doubled support for the products to improve their stability, particularly as they are moved between the feed conveyor (2) and the depositing station (18, 18') on the collection table (3, 3').

6. Machine for grouping products according to claim 1, **characterized in that** it comprises a means for detecting the presence of a product (1) to be captured on said feed conveyor (2), said means being arranged laterally to and upstream from said collector (4).

7. Machine for grouping products according to claim 1, **characterized in that** it comprises a collection table for the products (1) which consists of an endless belt conveyor, said conveyor being controlled to ensure an accumulation which allows grouping several batches of products formed by the collector (4).

8. Machine for grouping products according to claim 1, **characterized in that** it comprises two collection tables (3, 3') for captured products (1), said collection tables (3, 3') consisting of panels or endless belt conveyers which extend on each side of the feed conveyor (2) supplying said products (1), to allow depositing said products moved by the collector (4) on each side of said feed conveyor (2).

9. Machine for grouping products according to claim 1, **characterized in that** it comprises at least one robot (20) which takes the products (1) arranged in an angled row configuration on the collection table (3, 3'), said robot (20) comprising a head (21) arranged to collect the batch of products (1) and place them in a box or boxes.

10. Method of grouping products which are aligned and spaced apart on a feed conveyor (2), said method comprising the following steps:
- a step of capturing said products (1) with a rake-shaped collector (4) which is arranged transversely to the direction in which said products arrive;
- a step of transferring said products (1) to a table arranged alongside said feed conveyor (2),
- a step of releasing the batch of products (1) at the depositing station;
- a step of returning said collector (4) to the starting point, meaning to the first product (1) on said feed conveyor (2);
**characterized in that** it consists of capturing upright products having a non-circular horizontal cross-section, of the ovoid type, by means of a collector (4) having cells (5) arranged obliquely relative to the direction in which said products arrive,
orienting said products automatically, simultaneously with the capture operation, to place them in an angled row configuration,
and, during the release operation, moving said collector (4) in a reversing movement which is parallel to the orientation of said cells (5).

11. Method for grouping products according to claim 10, **characterized in that** it consists of placing the products (1) grouped by the collector (4) alternately on each side of the feed conveyor (2), meaning on the left side and on the right side of said feed conveyor (2), to reduce the packing speeds for the product batches so formed, at the depositing stations.

12. Method for grouping products according to either of claims 10 or 11, **characterized in that** it consists of placing adjacent to each other, at the depositing station, several rows of products (1) grouped into batches, before they are all taken away for boxing by an appropriate means such as a robot (20) or other means.
